# EUROPEAN PATENT APPLICATION

(11) **EP 2 020 774 A1**
(43) Date of publication of application: **04.02.2009**
(21) Application number: 07014921.6
(22) Date of filing: 30.07.2007
(51) Int. Cl.: H04L 12/24

(54) **Method and device for utilizing an object in a communication network, management system and communication system compris-ing such device**

(71) Applicant: Nokia Siemens Networks Oy, 02610 Espoo (FI)
(72) Inventor: Frantz, Michael, 81737 München (DE); Günther, Wolfgang, 81479 München (DE)
(74) Representative: Bruglachner, Thomas E.

(57) **Abstract**

A method and a device are provided for utilizing an object in a communication network, the method comprising the following steps of (i) identify a ring structure (110) within the communication network; (ii) assign the ring structure to the object; and (iii) utilize the object comprising said ring structure. Furthermore, a management system and a communication system are provided accordingly.

## Description

The invention relates to a method and to a device for utilizing an object in a communication network, to a management system comprising a functionality of the method and to a communication system comprising the device.

A Telecommunications Management Network (TMN) is a protocol model defined by ITU-T for managing open systems in a communications network (see, e.g., [1]). TMN provides a framework for enabling interconnectivity and communication across heterogeneous operations system and telecommunication networks. Hence, TMN defines a set of interface points for elements which perform the actual communications processing (such as a call processing switch) to be accessed by elements, such as management workstations, to monitor and control them. The standard interface allows elements from different manufacturers to be incorporated into a network under a single management control. TMN may utilize CMIP (Common Management Information Protocol) for communication between Operations Systems and network elements or Mediation devices when it uses Q3 interface.

TMN is in particular set forth in ITU-T Recommendation series M.3000, and is based on the OSI management specifications in ITU-T Recommendation series X.700.

The TMN framework in particular identifies four logical layers of network management:
- Business Management - performs functions related to business aspects, analyzes trends and quality issues, for example, or to provide a basis for billing and other financial reports.
- Service Management - performs functions for the handling of services in the network: definition, administration and charging of services.
- Network Management - performs functions for distribution of network resources: configuration, control and supervision of the network.
- Element Management - contains functions for the handling of individual network elements. This includes alarm management, handling of information, backup, logging, and maintenance of hardware and software.

A Network Element may further provide so-called agent services, mapping the physical aspects of the equipment into the TMN framework.

In transport networks it is a requirement that Ethernet services shall be provisioned by the TMN system end-to-end (similar to SDH networks). To be able to support the required end-to-end (e2e) service provisioning, the TMN system must be able to calculate a spanning tree through the network for identification of a route. A route is defined by Virtual LAN (VLAN) assignments to network elements' ports that are traversed by the route.

A virtual LAN, commonly known as a vLAN or as a VLAN, as described in [2] is a method of creating independent logical networks within a physical network. Several VLANs can coexist within such a network. This helps in reducing the broadcast domain and aids in network administration by separating logical segments of a LAN (like company departments) that should not exchange data using a LAN (they still can exchange data by routing).

A VLAN may comprise a network of computers that behave as if connected to the same link layer network - even though they may actually be physically connected to different segments of a LAN. Network administrators can configure VLANs through software rather than hardware, which makes them extremely flexible. One of the biggest advantages of VLANs emerges when physically moving a computer to another location: it can stay on the same VLAN without the need for any hardware reconfiguration.

According to [3], Resilient Packet Ring (RPR), also known as IEEE 802.17, is a standard designed for the optimized transport of data traffic over fiber rings. Its design is to provide the resilience found in SONET/SDH networks (50ms protection) but instead of setting up circuit oriented connections, providing a packet based transmission. This is to increase the reliability and the efficiency of Ethernet and IP services.

Within the transport network Resilient Packet Rings (RPRs) can be used.

The problem to be solved is in particular to integrate an RPR structure into an end-to-end provisioning of Ethernet services, in particular for a TMN system.

This problem is solved according to the features of the independent claims. Further embodiments result from the depending claims.

In order to overcome this problem, a method for utilizing an object in a communication network is provided comprising the following steps:
- identify a ring structure within the communication network;
- assign the ring structure to the object;
- utilize the object comprising said ring structure.

Such utilizing of the object may in particular comprise integrating, processing and/or managing of the object. Said utilization may be performed by a management system, in particular by a network management system.

In an embodiment, the ring structure corresponds to and/or comprises a resilient packet ring (RPR).

In another embodiment, the resilient packet ring comprises several network elements that are arranged in a ring topology.

The resilient packet ring may be a ring topology that enables automatic unblocking in case of a link failure. Insofar, the resilient packet ring may be considered a self-organizing structure.

In a further embodiment, the ring structure is automatically identified by a management system.

In a next embodiment, the ring structure is automatically identified by the management system after data relating to network elements of the communication network are uploaded to the management system.

Hence, upon receipt of the data of the network elements, the management system is able to identify the ring structure, in particular a resilient packet ring.

It is also an embodiment that the management system creates a resilient packet ring domain and utilizes the ring structure as a bridge.

Pursuant to another embodiment, the ring structure, in particular the resilient packet ring, is treated as a single object by the management system.

According to an embodiment, a spanning tree algorithm is run throughout the communication network treating the ring structure, in particular the resilient packet ring, as a single object.

The problem stated supra is also solved by a management system comprising the functionality of the method as described herein.

According to another embodiment, the management system may be utilized for configuration of the components of the communication network.

The problem stated supra is also solved by a device comprising a processor unit that is equipped / arranged such that the method as described herein is executable on said processor unit.

Further, the problem stated above is solved by a communication system comprising the device as described herein.

Embodiments of the invention are shown and illustrated in the following figures:
- Fig.1: shows a resilient packet ring RPR in combination with further network elements;
- Fig.2: shows a meshed network structure based on the structure depicted in Fig.1 identifying the resilient packet ring as a RPR domain by a TMN system;
- Fig.3: shows how a spanning tree can be set up for the network structure of Fig.2, wherein the resilient packet ring RPR is handled as an object, e.g., a bridge.

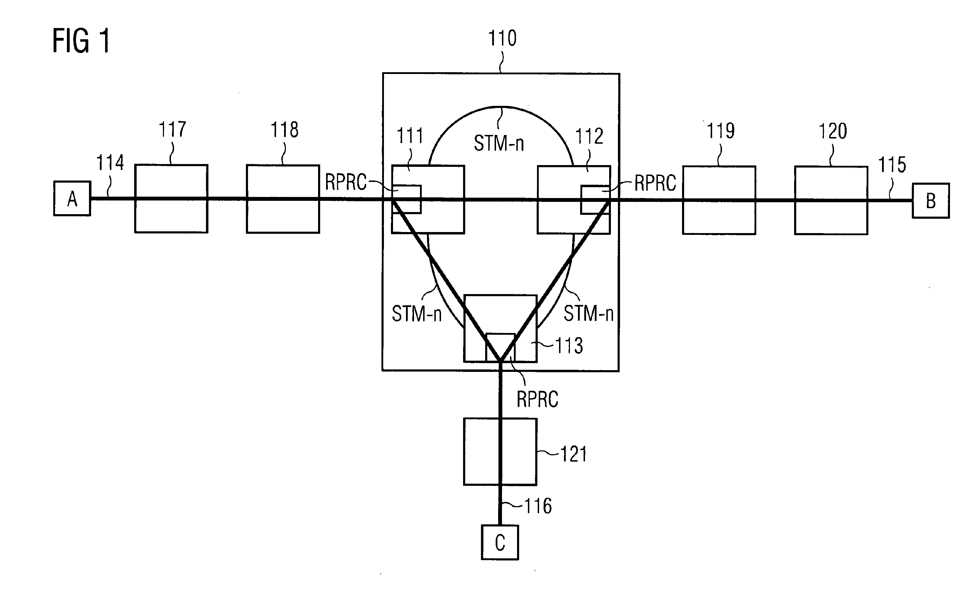

In **Fig.1****,** a resilient packet ring RPR 110 is shown comprising three RPR nodes 111, 112 and 113, each containing an RPR card RPRC.

Furthermore, a feeder path 114 is connected to RPR node 111, a feeder path 115 is connected to RPR node 112 and a feeder path 116 is connected to RPR node 113. Each feeder path (also referred to as "feeder line") may traverse one or more network elements (NEs) 117 to 121.

A network operator may want to create an Ethernet service connecting service endpoints A, B and C by using RPR. RPR allows transporting Ethernet frames with low or high priority and supports resiliency with fast recovery times.

For the perspective of the Ethernet protocol, RPR is a transparent service, e.g. STP PBDUs (Spanning Tree Protocol, Protocol Bridge Data Unit) can be transmitted transparently.

Fig.1 shows a scenario where an Ethernet Virtual Connection (EVC) has its endpoints at Ethernet ports that are connected via point-to-point Ethernet paths to Ethernet client ports of the RPR 110. These "internal" client ports are connected via an RPR service.

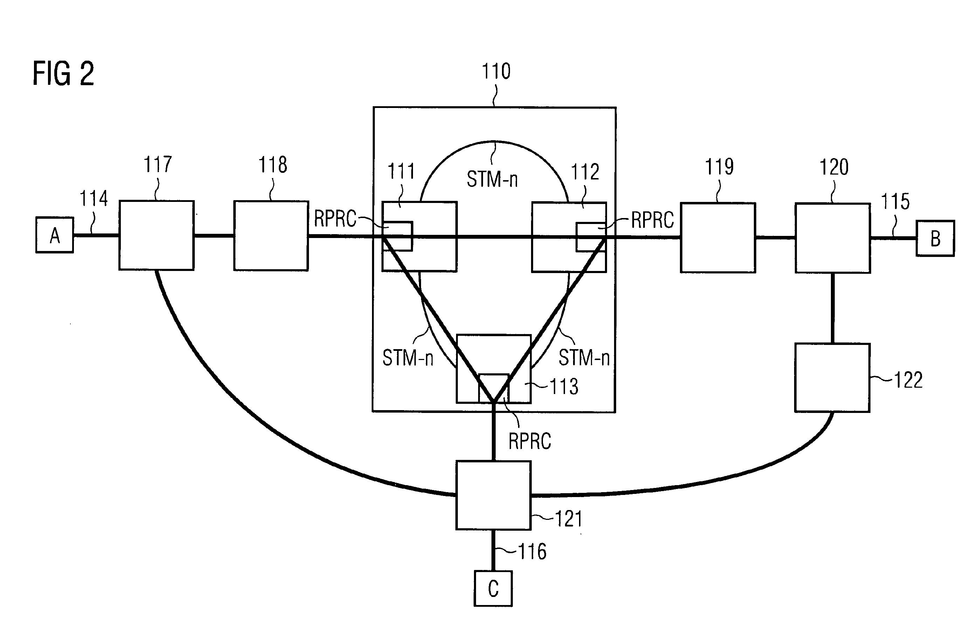

In addition, RPRs can be part of a meshed Ethernet network as shown in **Fig.2****.**

In addition to Fig.1, the network elements 117 and 121 are connected with each other and the network elements 121 and 120 are connected via a network element 122.

Therefore, the resilient packet ring RPR has also to be considered for the route calculation based on a Spanning Tree Protocol (STP, or Multiple Spanning Tree Protocol (MSTP), Rapid Spanning Tree Protocol (RSTP), etc. - various kinds of spanning tree protocols are referred to as "xSTP"), to identify the active route between the end-points of an Ethernet service.

The Telecommunications Management Network (TMN) system may in particular define an additional, in particular virtual, object for the resilient packet ring RPR,110, also referred to as "RPR Domain".

The resilient packet ring RPR 110 can be automatically identified by the TMN system after data of the network elements (NE) 117 to 122 is uploaded. Then, the TMN system creates a new RPR domain object and handles it as a special kind of bridge. Hence, the resilient packet ring RPR 110 in Fig.1 and Fig.2 shows such a particular bridge.

The RPR domain identified comprises one RPR card per network element 111, 112 and 113, i.e. the RPR domain is associated only with a portion of the NE's resources (and not with the complete network element). One network element may have several RPR cards equipped; in such case, this particular network element may be part of several RPR domains.

The RPR domain object simulates a virtual bridge distributed over several network elements, i.e. network elements 111 to 113 according to the example. For the determination of a spanning tree (via, e.g., xSTP), the WAN ports of the RPR, i.e. the ring ports, are not considered.

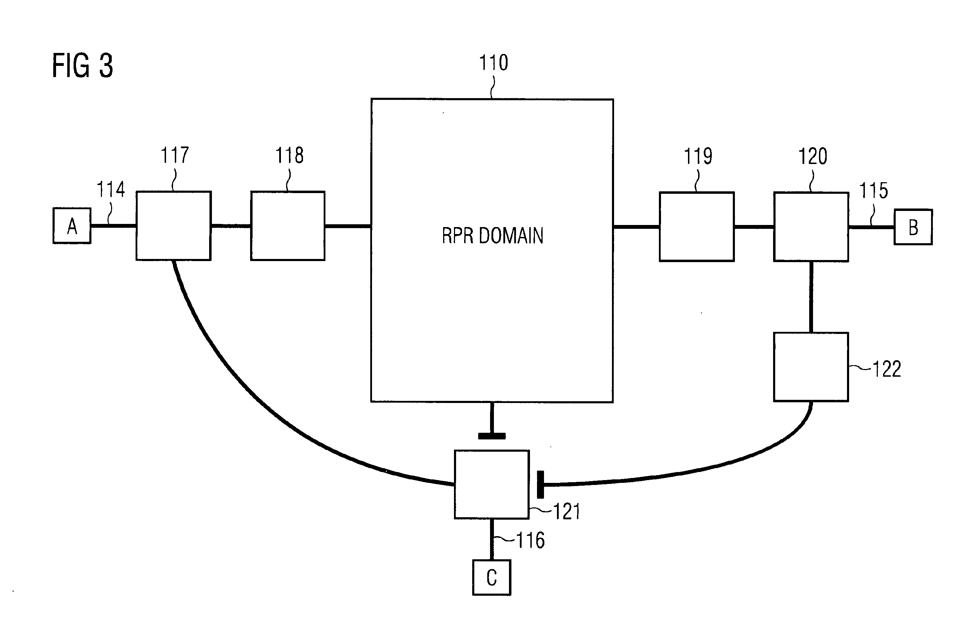

The RPR domain object resolves logical connections terminating at one of its physical ports. Hence, the RPR domain concept allows the spanning tree to be calculated (and presented to the user) as shown in **Fig.3****.**

In Fig.3 the network elements 117, 121, 122 and 120 are switches, the resilient packet ring RPR corresponds to the RPR domain 110 and a spanning tree algorithm treats the RPR domain 110 as a single network element.

In order to avoid any loops within the network elements, the spanning tree algorithm provides the structure according to Fig.3 wherein the connection between the RPR domain 110 and the switch 121 and the connection between the switch 121 and the switch 122 are blocked.

Hence, an unambiguous path connects the endpoints A, B and C of Fig.3:

| | Path (via) |
|---|---|
| A ⇔ B | A ⇔ 117 ⇔ 118 ⇔ 110 ⇔ 119 ⇔ 120 ⇔ B |
| A ⇔ C | A ⇔ 117 ⇔ 121 ⇔ C |
| B ⇔ C | B ⇔ 120 ⇔ 119 ⇔ 110 ⇔ 118 ⇔ 117 ⇔ 121 ⇔ C |

The approach presented herein allows to define an additional "RPR Domain" object that in particular simulates a distributed bridge. Such object is preferably utilized in a TMN system.

Further advantages of this approach are as follows:
a. It is possible to integrate a resilient packet ring into an end-to-end service provisioning for Ethernet services in a TMN system. A time consuming manual configuration of the service in the network is no longer required as such configuration is supported by the TMN system. This leads to a significant reduction of operating expenditures (OPEX).
b. The TMN system is able to calculate the spanning tree (according to a spanning tree protocol like xSTP, i.e. MSTP, RSTP, etc.) based route for meshed networks. There is no effort for the user any more required to ensure loop free network topologies. This results in a reduction of operating expenditures (OPEX) as well as to a reduction of capital expenditures (CAPEX).
c. The TMN system is able to present a distributed RPR as one object in the graphical presentation of the xSTP to the user. In case a failure requires an analysis of the network, this can be performed in a more efficient way thereby leading to a significant reduction of operating expenditures (OPEX).

### References:

- [1]: Wikipedia:
http://en.wikipedia.org/wiki/Telecommunications_Manag ement_Network
- [2]: Wikipedia: http://en.wikipedia.org/wiki/Vlan
- [3]: Wikipedia:
http://en.wikipedia.org/wiki/Resilient_Packet_Ring

## Claims

1. A method for utilizing an object in a communication network comprising the following steps:
- identify a ring structure within the communication network;
- assign the ring structure to the object;
- utilize the object comprising said ring structure.

2. The method according to claim 1, wherein the ring structure corresponds to and/or comprises a resilient packet ring (RPR).

3. The method according to any of the preceding claims,
wherein the resilient packet ring comprises several network elements arranged in a ring topology.

4. The method according to any of the preceding claims,
wherein the ring structure is automatically identified by a management system.

5. The method according to claim 4, wherein the ring structure is automatically identified by the management system after data relating to network elements of the communication network are uploaded to the management system.

6. The method according to claim 5, wherein the management system creates a resilient packet ring domain and utilizes the ring structure as a bridge.

7. The method according to any of the preceding claims,
wherein the ring structure is treated as a single object by the management system.

8. The method according to any of the preceding claims,
wherein a spanning tree algorithm is run throughout the communication network treating the ring structure as a single object.

9. A management system comprising a functionality according to the method according to any of the preceding claims.

10. The management system according to claim 9 utilized for configuration of the components of the communication network.

11. A device comprising a processor unit that is arranged such that the method according of any of the claims 1 to 8 is executable on said processor unit.

12. Communication system comprising the device according to claim 11.
